(19) Europäisches Patentamt
European Patent Office
Office européen des brevets

(11) **EP 0 881 628 A2**

(12) **EUROPÄISCHE PATENTANMELDUNG**

(43) Veröffentlichungstag:
02.12.1998 Patentblatt 1998/49

(51) Int. Cl.$^6$: **G11B 5/70**, G11B 5/84

(21) Anmeldenummer: 98109555.7

(22) Anmeldetag: 26.05.1998

(84) Benannte Vertragsstaaten:
AT BE CH CY DE DK ES FI FR GB GR IE IT LI LU MC NL PT SE
Benannte Erstreckungsstaaten:
AL LT LV MK RO SI

(30) Priorität: 27.05.1997 DE 19722137

(71) Anmelder: EMTEC Magnetics GmbH
67059 Ludwigshafen (DE)

(72) Erfinder:
• Heilmann, Peter, Dr.
67098 Bad Dürkheim (DE)
• Ilmer, Andreas, Dr.
67069 Ludwigshafen (DE)

• Jakusch, Helmut, Dr.
67227 Frankenthal (DE)
• Lenz, Werner, Dr.
67098 Bad Dürkheim (DE)
• Munch, Michel, Dr.
67400 Illkirch (DE)
• Nickolay, Gerd
67435 Neustadt (DE)
• Schneider, Norbert
67122 Altrip (DE)

(74) Vertreter:
Kinzebach, Werner, Dr. et al
Patent Attorneys,
Reitstötter, Kinzebach & Partner,
Sternwartstrasse 4
81679 München (DE)

(54) **Magnetische Aufzeichnungsträger**

(57) Die Erfindung betrifft magnetisches Aufzeichnungsmaterial, umfassend einen unmagnetischen Träger und darauf aufgebracht eine oder mehrere weitere Schichten, wobei wenigstens eine dieser weiteren Schichten eine zur Informationsspeicherung geeignete Magnetschicht ist, das dadurch gekennzeichnet ist, daß die einem zur Informationsspeicherung verwendeten Magnetkopf zugewandte Oberfläche (3') des Aufzeichnungsmaterials (3) ein Oberflächenprofil aufweist, das so beschaffen ist, daß 50 % der Oberfläche (3') einen Abstand von höchstens 80 nm und 90 % der Oberfläche (3') einen Abstand von höchstens 140 nm von einer Referenzfläche (2) aufweisen, an welcher das Aufzeichnungsmaterial (3) mit seiner Oberfläche (3') unter einer Zugspannung von etwa 140 bis 200 mN aufliegt.

EP 0 881 628 A2

EP 0 881 628 A2

**Beschreibung**

Die vorliegende Erfindung betrifft ein magnetisches Aufzeichnungsmaterial mit verbesserten Aufzeichnungs-Eigenschaften. Wie beispielsweise aus Ullmann's Encyclopedia of Industrial Chemistry, 5. Ed. Vol A14, VCH Verlagsgesellschaft mbH, Weinheim, Seite 172-176, insbesondere Seite 174-176, bekannt ist, werden an magnetische Aufzeichnungsträger hinsichtlich Speicherdichte zunehmend höhere Anforderungen gestellt. Die Erhöhung der Speicherdichte und die damit verbundene Verkürzung der Aufzeichnungswellenlänge führen aber zu Problemen bei der Informationsspeicherung, also dem Ablegen der Informationen auf dem Aufzeichnungsträger, und dem Auslesen der Informationen von dem Aufzeichnungsträger.

Diese Probleme äußern sich in einer Verschlechterung der elektromagnetischen Eigenschaften, wie z.B. Interferenzen der Speichersignale auf dem Aufzeichnungsträger, geringere Pegelwerte und Absenkung des Signal/Rausch-Verhältnisses.

Um diese Verschlechterung der elektromagnetischen Eigenschaften wenigstens teilweise zu kompensieren, werden besonders feinteilige ferromagnetische Pigmente zur Informationsspeicherung eingesetzt. Magnetische Aufzeichnungsschichten, welche diese Pigmente enthalten, besitzen jedoch bisher noch keine völlig zufriedenstellenden Eigenschaften. Insbesondere das Oberflächenprofil solcher Magnetschichten erweist sich als inhomogen. Diese Inhomogenität wiederum bewirkt ein immer noch zu geringes Pegelniveau, starkes Modulationsrauschen sowie starke Pegelschwankungen - d.h. unruhige Hüllkurven - und außerdem hohe Fehlerzahlen.

Der Erfindung lag daher die Aufgabe zugrunde, ein magnetisches Aufzeichnungsmaterial bereitzustellen, das eine hohe Speicherdichte besitzt, und ein verbessertes Oberflächenprofil aufweist. Insbesondere sollte das erfindungsgemäße Aufzeichnungsmaterial verbesserte Pegelwerte und ein geringeres Modulationsrauschen, möglichst geringe Pegelschwankungen beim Bandlauf bei gleichzeitig günstigem Laufverhalten, d.h. akzeptabel niedrigen Reibungskoeffizienten im Normal- und Feuchtklima aufweisen.

Gelöst wird die Aufgabe durch Bereitstellung eines magnetischen Aufzeichnungsmaterials umfassend einen unmagnetischen Träger und darauf aufgebracht eine oder mehrere weitere Schichten, wobei wenigstens eine dieser weiteren Schichten eine zur Informationsspeicherung geeignete Magnetschicht ist, das dadurch gekennzeichnet ist, daß die einem zur Informationsaufzeichnung verwendeten Magnetkopf zugewandte Oberfläche (3') des Aufzeichnungsmaterials (3) ein Oberflächenprofil aufweist, das so beschaffen ist, daß 50 % der Oberfläche (3') einen Abstand von höchstens 80 nm, insbesondere höchstens 75 nm, und 90 % der Oberfläche (3') einen Abstand von höchstens 140 nm, insbesondere höchstens 130 nm, von einer Referenzfläche (2) aufweisen, an welcher das Aufzeichnungsmaterial (3) mit seiner Oberfläche (3') unter einer Zugspannung von etwa 140 bis 200 mN aufliegt.

Vorzugsweise sollte ein erfindungsgemäßes Aufzeichnungsmaterial so beschaffen sein, daß 50 % der Oberfläche (3') einen Abstand von höchstens 40 bis 80 nm, insbesondere höchstens 45 bis 75 nm, und 90 % der Oberfläche (3') einen Abstand von höchstens 50 bis 130 nm, insbesondere höchstens 70 bis 120 nm, von der Referenzfläche (2) aufweisen.

Besonders bevorzugte Aufzeichnungsmaterialien sind solche, deren Dichtefunktion der Häufigkeit diskreter Abstandswerte eine monomodale Verteilung zeigt.

Die erfindungsgemäßen Aufzeichnungsmaterialien sind außerdem dadurch gekennzeichnet, daß das für sie errechnete Abstandsverhältnis A90 zu A50 etwa 1,0 bis etwa 1,5, vorzugsweise 1,2 bis 1,5, insbesondere 1,2 bis 1,4, beträgt, wobei die Abstandswerte A90 und A50 denjenigen Abstandswerten entsprechen, die 90% bzw. 50% der Oberfläche (3') unterschreiten und aus der Verteilungsfunktion diskreter Abstandswerte ermittelbar sind.

Die erfindungsgemäßen Aufzeichnungsträger, die in verschiedenen geometrischen Formen, wie Bänder oder Platten, ausgeführt sein können, eignen sich besonders für die analoge und insbesondere digitale magnetische Informationsspeicherung. Vorzugsweise finden sie bei sehr kurzer Aufzeichnungswellenlänge Anwendung, insbesondere bei Aufzeichnungswellenlängen unter 0,5 $\mu$m, wie sie beispielsweise im Audio-, Computer- und insbesondere Videobereich, wie z.B. bei dem sogenannten DVC, eingesetzt werden.

Die erfindungsgemäßen Aufzeichnungsmaterialien können in an sich bekannter Weise zur magnetischen Informationsspeicherung mindestens eine metallische Schicht oder, vorzugsweise, ein ferromagnetisches Pigment sowie Mischungen solcher Pigmente, oder metallische Pigmente, enthalten. Beispiele für ferromagnetische Pigmente sind oxidische Pigmente, wie $\gamma$-$Fe_2O_3$, Co-modifiziertes $\gamma$-$Fe_2O_3$, Co-Magnetit, $CrO_2$ oder Ba-Ferrite, die, wie allgemein bekannt ist, weitere chemische Elemente oder Verbindungen enthalten können. Unter metallischen Pigmenten werden solche verstanden, die zur magnetischen Informationsspeicherung ein Metall oder mehrere, vorzugsweise zwei, drei oder vier Metalle, oder eine Legierung oder mehrere, vorzugsweise zwei, drei oder vier Legierungen umfassen.

Als Metalle, Metallmischungen und Legierungen kommen Eisen, Nickel, Cobalt und deren Legierungen untereinander sowie mit Al, Si, Ca, Nd, Y, Mn, Zn, B, La, Pr in Betracht. Geeignete Metallpigmente sind beispielsweise in EP-A-0 520 155, EP-A-0 552 611, EP-A-0 592 922, DE-OS 42 24 227, sowie in den gängigen Publikationen über Metallpigmente, z.B. H. Jakusch, R.J. Veitch, Tagungsband Partec-Konferenz, 24. - 26. März 1992, Nürnberg - R.J. Veitch et al., J. Inf. Rec. Mats. 1994, Bd. 21, 321-34; K. Okamoto et al., J. Magnetism and Magnetic Mats. 155 (1996), 60 - 66.

2

Die ferromagnetischen metallischen Pigmente können zur Erhöhung der thermischen Stabilität, Abriebfestigkeit, sowie Korrosionsfestigkeit eine Hülle aus einem anorganischen, vorzugsweise oxidischen, oder organischen Material tragen. Als solche Materialien kommen z.B. Oxide von Al, Si, Y oder seltenen Erden, wie La, Nd, Pr, in Betracht, wie sie beispielsweise in EP-A-0 633 564 und EP-A-0 592 922 beschrieben sind.

Die ferromagnetischen metallischen Pigmente, die nadel- oder spindelförmig sein können, sollten vorteilhaft eine durchschnittliche Länge von 50 bis 300 nm, insbesondere 60 bis 270 nm, besitzen. Für analoge Videoaufzeichnungen besonders geeignet sind dabei Nadellängen von vorzugsweise 130 bis 250 nm und für digitale Videoaufzeichnungen sind besonders geeignet Nadellängen von vorzugsweise 50 bis 150 nm. Die nadel- oder spindelförmigen Pigmente sollten außerdem ein Verhältnis der durchschnittlichen Länge zur durchschnittlichen mittleren Dicke von 12:1 bis 3:1, insbesondere 8:1 bis 4:1 und eine spezifische Oberfläche (SSA) bestimmt nach DIN 66132, von 35 bis 65, insbesondere 45 bis 60 $m^2$/g aufweisen. Die optimale Nadelgeometrie für den jeweiligen Anwendungszweck läßt sich durch einige einfache Vorversuche leicht ermitteln.

Besonders in Betracht kommen solche ferromagnetischen metallischen Pigmente, deren Koerzitivkraft $H_c$ bei einer mittleren Stopfdichte von 0,95 g/$cm^3$ mindestens 115 kA/m und deren Magnetisierung Mm mindestens 135 n$TM^3$/g, gemessen bei einem Magnetfeld von 400 kA/m betragen.

Zur Herstellung erfindungsgemäßer magnetischer Aufzeichnungsmaterialien können die ferromagnetischen Pigmente gegebenenfalls mit Füllstoffen in einer Mischung aus flüssigem Verdünnungsmittel, Bindemittel und gegebenenfalls weiteren Zusatzstoffen, wie Gleitmittel und Dispergiermittel dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls erforderlich, Aushärten des Bindemittels mit anschließendem Kalandrieren.

Als flüssiges Verdünnungsmittel können wie üblich Ether, wie Tetrahydrofuran oder Dioxan, Ketone, wie Methylethylketon oder Cyclohexanon, Ester, wie Ethylacetat, oder Kohlenwasserstoffe, wie Alkane oder Aromaten, oder Mischungen dieser Lösungsmittel eingesetzt werden.

Als Bindemittel kommen übliche Polyurethane, Polyacrylate, Polymethacrylate, Polyamide, Vinylpolymere, wie Polystyrol, Polyvinylchlorid, Polyvinylacetat, Polyvinylformal, Polyvinylbutyral oder Polyacrylnitril, cellulosehaltige Bindemittel, wie Celluloseester, insbesondere Cellulosenitrate, Celluloseacetat, Cellulosetriacetat, Celluloseacetopropionat oder Celluloseacetobutyrat, Phenoxyharze, Epoxyharze oder Block- oder Copolymerisate dieser Verbindungen in Betracht.

Die Bindemittel können funktionelle Gruppen, wie primäre und sekundäre Hydroxylgruppen sowie Harnstoffgruppen, basische Gruppen, wie primäre, sekundäre und tertiäre Aminogruppen sowie deren Salze, insbesondere von Halogenen, wie Chlor oder Brom, aber auch salzförmige Gruppen, wie quaternäre Ammoniumgruppen der Formel -$NR_4X$ (mit R; Alkyl und X: Halogen, vorzugsweise Chlor oder Brom) oder saure Gruppen wie Sulfonsäure-, Phosphonsäure-, Phosphorsäure- und Carbonsäure-Gruppen sowie deren Salze, insbesondere von Alkalimetallen, wie Lithium, Natrium oder Kalium, aber auch reaktive Gruppen wie Epoxy- und Trialkoxysilan-Gruppen, enthalten. Salze von sauren Gruppen sind bevorzugt.

Als VC-Copolymere sind besonders solche mit einem Polymerisationsgrad von 100 bis 1000, speziell 200 bis 500, bevorzugt, die funktionelle Gruppen der Formel - $SO_3M$ (M = Li, Na, K) in Mengen von 5 - 5 x $10^2$ mmol/kg, gegebenenfalls seitenständige Epoxygruppen in Mengen von 10 - $10^4$ mmol/kg, bevorzugt von $10^2$ - $10^3$ mmol/kg, enthalten (vgl. z.B. EP-A-0 520 155 und EP-A-0 552 611).

Als Polyurethanbindemittel kommen Polyester-, Polyether-, Polycarbonat-, Polycaprolacton- und Polyharnstoff-Polyurethane mit einem Molekulargewicht (Gewichtsmittel) von 5000 bis 200 000, bevorzugt 10 000 bis 100 000, und einem Glasübergangsbereich von -20°C bis + 100°C in Frage. Diese können auch end- oder seitenständige primäre und/oder sekundäre Hydroxylgruppen in Mengen von 0,1 bis 2 Gew.-% enthalten. Besonders bevorzugt sind Polyester-, Polycaprolacton- und Polyharnstoff-Polyurethane mit funktionellen Gruppen der Formeln -$SO_3M^1$, -$PO(OM^1)$ $(OM^2)$, -$COOM^1$ ($M_1$, $M_2$ = H, Li, Na, K) in Mengen von 1 bis $10^3$ mmol/kg, vorzugsweise von 5 bis 5 x $10^2$ mmol/kg. (Vgl. z.B. DE-OS 42 41 505 und DE-OS 42 41 506, EP-A-0 490 201 und EP-A-0 490 223.)

Als Gleitmittel finden üblicherweise gesättigte und ungesättigte Fettsäuren, wie beispielsweise Stearinsäure, Palmitinsäure, Myristinsäure, Laurinsäure, Behensäure, Ölsäure, Linolsäure, Linolensäure, Ester und Amide von gesättigten und ungesättigten Fettsäuren, wie beispielsweise n-Butyl- und i-Butylstearat und -palmitat, n-Octylstearat, i-Octylstearat, i-Tridecylstearat, i-Hexadecylstearat, Butoxyethylstearat, Ölsäure- und Stearinsäureamid, Anwendung.

Als Dispergiermittel können in üblicher Weise kationische, nichtionische oder, vorzugsweise, anionische Tenside verwendet werden. Geeignete anionische Tenside sind z.B. verzweigte oder vorzugsweise lineare, gesättigte oder ungesättigte Fettsäuren, insbesondere $C_{12}$-$C_{20}$-Fettsäuren, wie z.B. Laurin-, Tridecan-, Myristin-, Pentadecan-, Palmitin-, Margarin-, Stearin-, Nonadecan-, Arachin-, Öl-, Linol- oder Linolensäure, wie insbesondere Stearinsäure, Myristinsäure und Ölsäure, oder deren Salze mit ein- oder zweiwertigen Metallionen, wie beispielsweise Zinkoleat und Zinkstearat; Phosphorsäureester` wie Di- und Monoester aus Phosphorsäure und polyoxethyliertem Alkylphenol (GAFAC RM 710), Monoester aus Phosphorsäure und polyoxalkyliertem Fettalkohol (Lutensit AEP), Di-2-ethylhexylphosphat, Sulfonate, wie etwa die Na-Salze einer Alkylbenzolsulfonsäure oder des Sulfobernsteinsäure-di-(2-ethylhexyl)esters aber auch innere Salze mit Phosphat- und Ammoniumgruppen, wie Lecithin, oder mit Carboxylat- und Ammoniumgruppen, wie der Ester aus dimerisierter Ölsäure und Dimethylethanolamin. Besonders bevorzugt sind jedoch die oben bezeichneten gesättigten oder ungesättigten Fettsäuren.

Als Füllstoffe können beispielsweise genannt werden: abrasiv wirkende Füllstoffe zur Reinigung der Videoköpfe, wie $\alpha$-Aluminiumoxid unterschiedlicher Partikelgröße und Partikelgestalt (z.B. AKP-Typen und HIT-Typen der Fa. Sumitomo Chemical, wie AKP-30, AKP-50, AKP-28, HIT-50A, HIT-60A, HIT-80A), Siliciumdioxid, Chromgrün, $\alpha$-Eisenoxid, Titandioxid; unterschiedliche Rußtypen, vor allem zur Absenkung des Oberflächenwiderstandes und Verbesserung des Reibungsverhaltens mit einer spezifischen Oberfläche (SSA) bestimmt nach DIN 66132 von 5 bis 500 $m^2$/g, einer DBPA-Zahl von 10 bis 400 ml/100 g und Teilchengrößen von 10 bis 300 nm, wie etwa die Produkte Black Pearls 1100, 1000, 900, 800 und 700, Vulcane XC-72 und P, Elftex 570, 480, 460, 280, 160, 120, Regal 350 und 250 der Fa. Cabot Corp. oder Raven 3500, 1255, 2000, 890H und Conductex SC der Fa. Columbian Carbon Co., sowie Wachse, wie Polyethylen- und Polypropylenwachse, zur Verbesserung des Reibungsverhaltens.

Als nichtmagnetische und nichtmagnetisierbare Träger lassen sich die üblichen starren und flexiblen Trägermaterialien verwenden, insbesondere Folien aus linearen Polyestern, wie Polyethylenterephthalat, die im allgemeinen in Stärken von bis 4 bis 200 $\mu$m und insbesondere von 5 bis 75 $\mu$m verwendet werden.

Ebenso ist es möglich, mehrere der beschriebenen, zur magnetischen Informationsspeicherung geeignete Schichten auf das Trägermaterial aufzubringen. Bei diesen Aufzeichnungsträgern kann man vorteilhaft eine nichtmagnetische oder geringmagnetische Schicht zwischen dem Träger und der zur Informationsspeicherung geeigneten Schicht aufbringen, wobei diese Zwischenschicht vorzugsweise eine Stärke von 0,2 bis 4 $\mu$m, insbesondere 1 bis 3 $\mu$m aufweisen sollte. Unter einer geringmagnetischen Schicht versteht man eine solche Schicht, die geringmagnetische Pigmente enthält.

Die geringmagnetischen Pigmente, die beispielsweise plättchenförmig, vorzugsweise jedoch nadel- oder spindelförmig sein können, sollten im Falle von nadel- oder spindelförmigen Pigmenten vorteilhaft eine durchschnittliche Länge von 80 bis 300 nm, insbesondere 100 bis 200 nm, ein Verhältnis der durchschnittlichen Länge zur durchschnittlichen mittleren Nadeldicke von 15:1 bis 2:1, insbesondere 10:1 bis 4:1 und eine SSA von 15 bis 90, insbesondere 40 bis 80 $m^2$/g aufweisen. Die Bedingungen zur Einstellung der für den jeweiligen Anwendungszweck optimalen Nadelgeometrie lassen sich durch einige einfache Vorversuche leicht ermitteln. Die pigmentierten nichtmagnetischen Zwischenschichten können als feinteilige nichtmagnetische Pulver Metalloxide, wie Titandioxid (Rutil), Siliciumdioxid, Bariumsulfat, Zirkoniumdioxid, Zinkoxid, $\alpha$- und $\beta$-Aluminiumoxid enthalten, wobei Titandioxid besonders bevorzugt ist. Desgleichen kommen nadelförmige oder spindelförmige Metalloxide, wie $\alpha$-Eisenoxid, Goethit und Chromgrün in Frage, wobei $\alpha$-Eisenoxid besonders bevorzugt ist. Diese nichtmagnetischen Metalloxide sind ausführlich in DE-OS 43 02 5165, EP-A-0 520 155 und EP-A-0 552 611 sowie EP-A-0 582 472 beschrieben.

Die nichtmagnetischen Zwischenschichten können neben den genannten feinteiligen nichtmagnetischen Metalloxiden die gleichen oder ähnlichen Füllstoffe wie oben für die Magnetschichten beschrieben enthalten. Als Bindemittel und Dispergiermittel eignen sich ebenfalls prinzipiell die gleichen oder vergleichbare oben für die Magnetschichten beschriebenen Produkte.

Besonders in Betracht kommen solche geringmagnetischen Pigmente, deren Koerzitivkraft $H_c$ 2 bis 30 kA/m, insbesondere 3 bis 25 kA/m und deren Magnetisierung $M_m$ 1 bis 80 $nTm^3$/g, insbesondere 4 bis 60 $Tm^3$/g, gemessen mit einem Schwingmagnetometer, betragen.

Als geringmagnetische Pigmente kommen in erster Linie solche der Zusammensetzung

$$Cr^aO_x \cdot nH_2O$$

in Betracht, worin

a     für die mittlere Wertigkeit des Chroms mit 3,0 <a≤3,25
x     für die sich aus der Chrom-Wertigkeit ergebenden Sauerstoffäquivalente und
n     für den Wassergehalt mit 0<n<(4-a)/2

steht.

Die nichtmagnetischen Pigmente können kugelförmig, sphärisch, kubisch oder polyedrisch, vorzugsweise jedoch nadel- oder spindelförmig sein. Nadel- oder spindelförmige Pigmente sollten vorteilhaft eine durchschnittliche Länge von 80 bis 250 nm, insbesondere 100 bis 170 nm, ein Verhältnis der durchschnittlichen Länge zur durchschnittlichen mittleren Nadeldicke von 15:1 bis 2:1, insbesondere 10:1 bis 4:1 und eine SSA von 10 bis 80, insbesondere 40 bis 70 $m^2$/g besitzen. Kugelförmige, sphärische, kubische oder polyedrische Pigmente sollten einen durchschnittlichen Durchmesser von 10 bis 200 nm, insbesondere 15 bis 120 nm aufweisen. Die optimale Geometrie für den jeweiligen Anwendungszweck läßt sich durch einige einfache Vorversuche leicht ermitteln.

Als nichtmagnetische kugelförmige Pigmente können in erster Linie $TiO_2$, $ZrO_2$, $SnO_2$, $Al_2O_3$, $ZnO$, $SiO_2$, Bornitrid oder $BaSO_4$, und als nadel- oder spindelförmige Pigmente in erster Linie Pigmente der Zusammensetzung

$$Cr_2O_3 \cdot nH_2O$$

mit $0 \leq n \leq 1$,
aber auch $\alpha$-$Fe_2O_3$, $TiO_2$, FeOOH eingesetzt werden, wie sie beispielsweise in EP-A-0 520 155, EP-A-0 552 611, EP-A-0 592 922, EP-A-0 582 472, EP-A-0 609 154 oder DE-OS 4 224 227 beschrieben sind.

Zur Herstellung einer Zwischenschicht können die geringmagnetischen oder nichtmagnetischen Pigmente gegebenenfalls mit den oben genannten Füllstoffen in an sich bekannter Weise wie bereits beschrieben in einer Lösung aus Lösungsmittel, Bindemittel und gegebenenfalls weiteren Zusatzstoffen, wie Gleitmittel und Dispergiermittel, dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls erforderlich, Aushärten des Bindemittels mit anschließendem Kalandrieren.

Ebenso ist es möglich, mehrere der beschriebenen Zwischenschichten auf das Trägermaterial aufzubringen.

Die erfindungsgemäßen Aufzeichnungsträger können auch vorteilhaft eine nichtmagnetische oder geringmagnetische Schicht auf der dem Magnetkopf bei der Informationsspeicherung entgegengesetzten Seite des Trägers enthalten, wobei diese Rückschicht vorzugsweise eine Stärke von 0,3 bis 1,5 $\mu$m, insbesondere 0,5 bis 1 $\mu$m aufweisen sollte.

Zur Herstellung einer Rückschicht können die genannten geringmagnetischen oder nichtmagnetischen Pigmente gegebenenfals mit den genannten Füllstoffen, besonders bevorzugt mit Ruß, in an sich bekannter Weise wie bereits beschrieben in einer Mischung aus Verdünnungsmittel, Bindemittel und gegebenenfalls weiteren Zusatzstoffen, wie Gleitmittel und Dispergiermittel, dispergiert und auf eine unmagnetische Trägerschicht aufgetragen werden. Nach der Orientierung der ferromagnetischen Pigmente in einem starken Magnetfeld kann die weitere Verarbeitung wie üblich erfolgen, z.B. durch Entfernen des Lösungsmittels und, falls erforderlich, Aushärten des Bindemittels mit anschließendem Kalandrieren.

Ebenso ist es möglich, mehrere der beschriebenen Rückschichten auf das Trägermaterial aufzubringen.

Die auf den Träger aufzubringenden Beschichtungsmassen für unmagnetische oder geringmagnetische Rückschichten, unmagnetische oder geringmagnetische Zwischenschichten und/oder magnetische Aufzeichnungsschichten stellt man vorzugsweise aus einem knetbaren Gemisch aus den anorganischen Bestandteilen, polymeren Bindemitteln, Lösungs- bzw. Verdünnungsmittel und den gegebenenfalls benötigten weiteren Zusätzen, wie Gleitmittel und insbesondere Dispergiermittel, her.

Der Feststoffgehalt der knetbaren Gemische sollte im Bereich von 75 bis 85 Gew.-% liegen. Für die Herstellung der mit dem Magnetkopf in Kontakt befindlichen Oberschicht verwendet man vorzugsweise Knetpasten mit Feststoffgehalten im Bereich von 78 bis 85 Gew.-%, vorzugsweise 80 bis 82 Gew.-%, insbesondere 80 bis 81,5 Gew.-%. Für die Herstellung der Unter- und Rückschicht verwendet man vorzugsweise Knetpasten mit Feststoffgehalten im Bereich von etwa 75 bis 80 Gew.-%, vorzugsweise etwa 76 bis 78 Gew.-%.

Vorzugsweise stellt man Knetpasten her, die eine lineare, gesättigte oder ungesättigte $C_{12}$-$C_{20}$-Fettsäure obigen Typs in einem Anteil von etwa 2 bis 5 Gew.-% enthalten. Dieser Gewichtsanteil ist in Knetpasten für die Aufzeichnungsschicht(en) bezogen auf das magnetische Pigment. In Knetpasten für die Unter- oder Rückschicht(en) ist der Anteilswert bezogen auf die unmagnetischen oder geringmagnetischen Pigmente.

Diese Knetpasten werden dann unter geeigneten Bedingungen geknetet. Geeingete Knetertypen sind z.B. Batch-Kneter (drucklos), Batch-Kneter mit Druckstempel, kontinuierliche Extrusionskneter (sowohl Einschnecken- als auch Zweischneckentyp). Die Durchführung des Knetprozesses erfolgt nach gründlicher Inertgasspülung, d.h. unter $N_2$, Argon, Neon oder dergleichen. Die Knetdauer beträgt beispielsweise im Batch-Kneter (drucklos) 1 bis 5 Stunden, vorzugsweise 2 bis 4 Stunden. Die Prozeßtemperatur liegt bei etwa 25-50 °C, vorzugsweise etwa 30-45 °C.

Das Pigment/Bindemittelverhältnis der Knetpasten liegt bei etwa 10:1 bis etwa 5:1, vorzugsweise 9:1 bis 5,5:1, sowohl für die magnetischen Ober- als auch die unmagnetischen Unterschichten.

Vor dem eigentlichen Knetprozeß ist keine Vorbelegung oder Vorbenetzung des Pigmentes mit einem Oberflächenbehandlungsmittel, welches stark saure polare Gruppen, wie -$SO_3H$, -$OSO_3H$, -$PO_3H_2$, enthält oder mit Silan-Kupplungsmittel, Titanat-Kupplungsmittel u.ä. (beschrieben in der EP 0 446 906) erforderlich.

Neben den jeweiligen Pigmenten können auch die verwendeten Bindemittel, vorzugsweise das eingesetzte VC-Copolymere, und Dispergiermittel, wie etwa Stearinsäure und/oder Myristinsäure, im Batch-Kneter in fester Form vorgelegt werden. Nach kurzem Mischen der genannten festen Komponenten werden die noch fehlenden Bindemittelkomponenten in gelöster Form bei rotierenden Knetschaufeln langsam zugetropft, wobei auf optimale Homogenität des entstehenden Gemisches zu achten ist. Die noch fehlende Lösemittelmenge kann schließlich ergänzt werden.

Weitere Angaben zum bevorzugten Batch-Kneter (drucklos):

Die spezifische Leistungsaufnahme in der Knetpaste beträgt 0,05 bis 3, vorzugsweise 0,1 bis 2 und insbesondere 0,15 bis 1 Watt/$cm^3$. Über das Zeitmittel der Knetdauer beträt die spezifische Leistungsaufnahme etwa 0,15 bis 0,5

Watt/cm$^3$ (Leerlaufleistung jeweils abgezogen).

Die Spaltweite zwischen Knetkammerwand und Knetschaufeln beträgt etwa 0,2 - 2 mm, vorzugsweise 0,5 - 1 mm.

Die Knetschaufeln sind so ausgestaltet, daß nur ein minimales Totvolumen zwischen beiden Knetschaufeln vorhanden ist.

Nach Beendigung des Knetvorgangs wird die Knetpaste portionsweise in ein geeignetes Verdünnungsmittel eingerührt und gründlich dispergiert. Der Feststoffgehalt der Dispersion sollte dabei im Bereich von etwa 15 bis 35 Gew.%, insbesondere bei etwa 20 bis 30 Gew.-%, liegen. Die Dispergierdauer beträgt etwa 5 bis 15 Stunden. Das Dispergieren erfolgt in üblichen Dispergiervorrichtungen, wie z.B. einer Rührwerksmühle.

Die so erhaltene Dispersion wird abschließend nach Zugabe geeigneter Gleitmittel, wie etwa gesättigter und ungesättigter Fettsäuren sowie Fettsäureester, und eines für die Herstellung von Magnetbändern üblichen Vernetzungsmittels auf Polyisocyanatbasis, wie das Umsetzungsprodukt von 3 Molen Toluylendiisocyanat mit 1 Mol Trimethylolpropan, und gegebenenfalls weiterem Lösungsmittel filtriert, wobei die Porengröße des verwendeten Filters im Bereich von etwa 2 $\mu$m liegen sollte. Auf diese Weise erhält man eine homogene, feinteilige, absetzstabile und flokkulatfreie beschichtungsfertige Dispersion.

Werden auf den nichtmagnetischen Träger mehrere Schichten auf die gleiche Seite des Trägermaterials aufgetragen, so können die Schichten einzeln aufgetragen, getrocknet und nachbehandelt, beispielsweise kalandriert werden. Vorzugsweise erfolgt jedoch eine Naß-in-Naß Auftragung. Hierzu sei beispielsweise verwiesen auf folgende Patentanmeldungen EP 0 373 856, EP 0 392 810, EP 0 493 114, JA 63 - 187 418, Sho64 - 19524, DE 39 33 977, DE 40 08 005 und DE 19 504 930; sowie auf S.H. Inaba et al, IEEE Trans. Magn., Bd. 29, Nr. 6, Nov. 1993, 3607-12, A. Kashiwaga, FUJI R & D, 39 (1994), 82 - 87 und K. Okamoto et al., J. Magn. and Magn. Mat. 155 (1996), 60 - 66.

Eine zur Bestimmung der erfindungsgemäßen Oberflächenbeschaffenheit des Aufzeichnungsmaterials geeignete Vorrichtung ist beispielsweise in der EP-B-0 032 710 beschrieben, auf deren Inhalt hiermit in vollem Umfang Bezug genommen wird.

Dieses Verfahren sieht vor, daß zur Untersuchung der Oberfläche das interferometrisch untersuchte Oberflächenfeld in Form eines Materialvorschubs des Aufzeichnungsmaterials außerhalb der Referenzfläche gebracht und dort unter einer Neigung zur optischen Achse zwischen 80 und 45 Winkelgraden betrachtet wird und die Einfallsrichtung des Lichtstrahlenbündels dabei so gewählt wird, daß an einer beliebig gewählten, zur ebenen Oberfläche des Aufzeichnungsmaterials antiparallelen Fläche der einfallende Lichtstrahl in Richtung der optischen Achse reflektiert wird, und daß aus der Helligkeitsverteilung des betrachteten Oberflächenfeldes auf den Verlauf dieser Flanken und damit auf den Verlauf des Oberflächenprofils geschlossen wird.

Die Vorrichtung zur Durchführung des Verfahrens weist eine Lichtquelle und eine optische Einrichtung zur Sichtbarmachung des durch die zu untersuchende Oberfläche des Aufzeichnungsmaterials und einer Referenzfläche erzeugten Interferenzfeldes auf, wobei eine Einrichtung zum Anlegen des Aufzeichnungsmaterials unter vorbestimmter Zugspannung an die Referenzfläche vorgesehen ist. Eine vorteilhafte Ausführungsform der Vorrichtung sieht ein gebogenes Glassegment vor, an dessen konvexer Referenzfläche der Aufzeichnungsträger mit der zu untersuchenden Oberfläche mit Hilfe einer Spannvorrichtung zumindest teilweise anliegt.

Dabei ist es günstig, wenn die konvexe Krümmung des Glassegments gleich der Krümmung eines gebräuchlichen, z.B. ring-, platten- oder trommelförmigen, Magnetkopfes, im Bereich dessen Luftspaltes ist.

Das Verfahren ist dabei nicht auf die Anwendung eines Glassegments beschränkt. Es können auch flexible oder ebene Anlageflächen eingesetzt werden. Verfahrenswesentlich ist, daß die zu untersuchende Oberfläche des Aufzeichnungsträgers in ausreichenden Kontakt mit der Auflagefläche gebracht wird.

Ferner kann die Referenzfläche auch durch ein zweites Aufzeichnungsmaterial gebildet sein.

In Weiterbildung der Vorrichtung kann zur Beobachtung mittels eines Fernsehmonitors und/oder zur Speicherung der sichtbar gemachten Oberflächenbeschaffenheit des Aufzeichnungsträgers eine Laufbildkamera auf die optische Beobachtungseinrichtung, vorzugsweise auf das Okular eines Mikroskops, ausgerichtet werden.

Für die Bestimmung des Oberflächenprofils des Aufzeichnungsmaterials wird in der Regel eine Vergröberung in der Weise erzeugt, daß durch das Anlegen der zu untersuchenden Oberfläche des Aufzeichnungsmaterials an eine sehr glatte Fläche die Unebenheiten erheblich leichter erkennbar werden. Zur Veranschaulichung kann man sich vorstellen, daß ähnlich der Zeltstange eines Rundzeltes eine Erhöhung auf der Oberfläche, beispielsweise ein festsitzender Fremdkörper, das Aufzeichnungsmaterial von der glatten, als Referenzfläche anzusehenden Anlagefläche in einem weiten Umkreis abhebt, so wie dies durch eine Unebenheit auf dem Aufzeichnungsträger am Magnetkopf geschieht. Der Basisdurchmesser dieses Zeltes ist ein Vielfaches des Durchmessers des Fremdkörpers. Ist die Anlagefläche transparent ausgebildet und wird der Aufzeichnungsträger durch die Fläche mit monochromatischem Licht beleuchtet, so wird die Zeltbasis durch Interferenz der vom Meßstrahl und der von der Anlagefläche reflektierten Lichtstrahlen sichtbar. Damit ist auf einfache Weise erreicht, daß Unebenheiten obengenannter Größenordnung bei kleiner Vergrößerung des Mikroskops (bei einem großen Beobachtungsfeld also) durch Interferenzringe, die an den das Zelt bildenden Grenzflächen entstehen, leicht erkannt werden können.

Die Höhe der Unebenheiten kann durch quantitative Auswertung des Interferenzmusters bestimmt werden. Vorteilhaft kann man hierzu die bei verschiedenen Frequenzen des eingestrahlten Lichts aufgezeichneten Interferenzmuster heranziehen. Dazu kann beispielsweise monochromatisches Licht verschiedener Wellenlänge gleichzeitig oder nacheinander eingestrahlt werden oder nichtmonochromatisches, vorzugsweise weißes Licht, mit nachfolgender spektraler Auftrennung beispielsweise im Okularbereich des Mikroskops oder in der genannten Laufbildkamera.

Weitere Einzelheiten des Verfahrens und der Vorrichtung ergeben sich aus der nachfolgenden Beschreibung eines in den Figuren dargestellten Ausführungsbeispiels.

Es zeigt

Fig. 1    eine schematische Darstellung einer für die Oberflächenanalyse verwendbaren Vorrichtung;
Fig. 2    einen schematischen Ausschnitt des Beobachtungsfeldes;

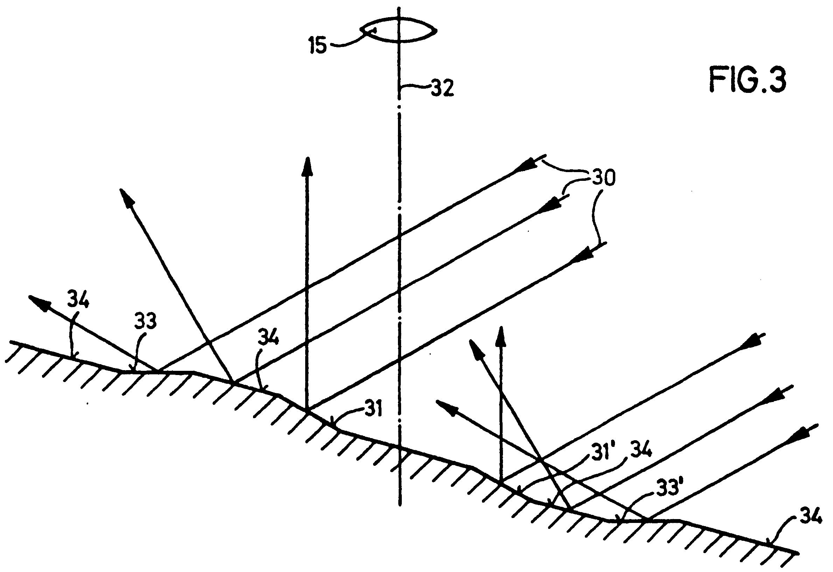

Fig. 3    ein Oberflächenprofil eines Aufzeichnungsträgers mit dem Lichtstrahlschema zur Bestimmung der Beschaffenheit der Oberfläche;
Fig. 4    eine Detailansicht der Vorrichtung nach Fig. 1, wobei die Meßanordnung an eine gewölbten Glassegment dargestellt ist.

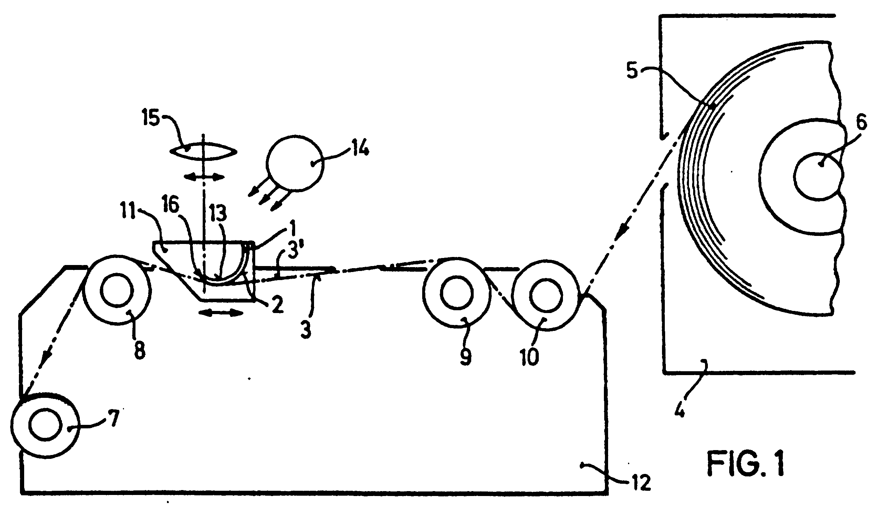

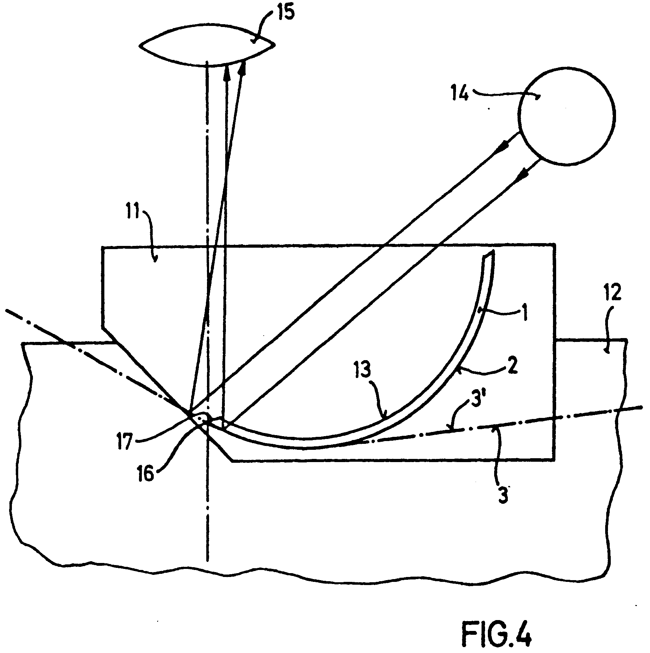

Zentrales Element der Vorrichtung ist eine transparente Unterlage (1) (Fig. 1 und 4), bestehend aus einem vorzugsweise etwa kreisförmig gewölbten Glassegment, über dessen konvexe, äußerst glatte Fläche (2), die als Referenzflache dient, der zu untersuchende Aufzeichnungsträger (3) geführt ist und mit der zu vermessenden Oberfläche daran anliegt. Um ähnliche oder insbesondere gleiche Zugspannungen zu gewährleisten, ist eine Spanneinrichtung für den zu vermessenden Aufzeichnungsträger vorgesehen.

Bei bahn- oder bandförmigen Aufzeichnungsträgern kann die Zugspannung vorteilhaft mittels einer in einem zum Glassegment (1) hin offenen, vor Staub schützenden Gehäuse (4) drehbar gelagerten Abwickelrolle (5), deren Welle (6) ständig gebremst ist, und einer Aufwickelrolle (7) für den Aufzeichnungsträger (3) eingestellt werden. Die Aufwickelrolle (7) ist in an sich bekannter Weise, beispielsweise mittels eines Handrades oder eines elektromotorischen Antriebs, zum Vorschub des Aufzeichnungsträgers geeignet. Um den Kontakt zwischen der konvexen Fläche (2) des Glassegments (1) und dem Aufzeichnungsträger (3) herzustellen, sollte der Aufzeichnungsträger vorzugsweise zwischen den beiden Rollen (5) und (7) über die Führungsrollen (8) und (9) laufen. Vorteilhaft ist ferner eine der Abwickelrolle (5) unmittelbar nachgeordnete Vliesstoffrolle (10), durch die die zu untersuchende Oberfläche (3') des Aufzeichnungsträgers von losem Staub gereinigt wird, sowie eine Zuführung für Reinluft zu der gesamten Meßvorrichtung, um Staubpartikel fernzuhalten.

Die Zugspannung sollte, gemessen zwischen (9) und (1), 140 mN bis 200 mN, vorzugsweise 170 mN bis 180 mN betragen.

Das Glassegment (1) besteht aus einem transparenten Material, vorzugsweise Glas, mit einer Stärke von insbesondere 0,3 bis 2 mm, wobei die zur Bestimmung der Oberflächenbeschaffenheit der Aufzeichnungsmaterialien verwendeten Interferenzsignale umso geringer werden, je geringer die Stärke des Glassegmentes (1) ist. Für die Untersuchung von bandförmigen Aufzeichnungsträgern hat sich für die Wölbung ein Radius von etwa 15 mm als vorteilhaft erwiesen, da dieser dem Radius der meisten Magnetkopfspiegel entspricht, so daß sich praxisgerechte Kopfkontakt-Verhältnisse ergeben.

Die Stirnfläche (17) des Glassegmentes (1) (Fig. 4) ist so geschliffen, daß sie zur Flache des Aufzeichnungsträgers unter einem Winkel von 60° geneigt ist. Dieser Schliff vermeidet Schattenbildung an der unteren Kante (16) der Stirnfläche (17) und erlaubt auch noch die Beobachtung des Aufzeichnungsträgers durch die schmale Seite.

Das Glassegment (1) ist in Führungschlitzen des Segmentträgers (11) so befestigt, daß die Tangente an die Kante (16) in einem Winkel von 60° zur Beobachtungsachse geneigt ist.

Der Glassegmentträger (11) kann, durch Nuten geführt, auf den beiden Stirnseiten (12), in denen auch die Rollen (7) bis (10) gelagert sind, in Vorschubrichtung des Aufzeichnungsträgers parallel verschoben werden und durch 2 Klemmschrauben an beiden Seiten des Segmentträgers (11) auf diesem arretiert werden.

Über dem Glassegment (1), d.h. über dessen konkaver Fläche (13) ist eine Lichtquelle (14) so angeordnet, daß deren Lichtstrahlen in einem Winkel von etwa 45° zur Horizontalen, d.h. in einem Winkel von ca. 105° auf die Referenzfläche (2) an der Kante (16) und auf den tangential vom Glassegment abgezogenen Aufzeichnungsträger (3) treffen.

Als Lichtquelle (14) können Lichtquellen mit diskreten Emissionsbanden, die im wesentlichen Licht einer bestimmten Frequenz, wie Natriumdampflampen oder Laserdioden, oder Licht mehrerer Frequenzen, wie Quecksilberdampflampen, emittieren, oder vorzugsweise Lichtquellen mit einem kontinuierlichen oder quasikontinuierlichen Emissionsspektrum, wie Glühlampen, eingesetzt werden.

Über der Flache (13) befindet sich eine optische Einrichtung (15) zur Sichtbarmachung des von den sich berührenden Flächen (2) und (3') erzeugten Interferenzfeldes, vorzugsweise ein Mikroskop, dem vorteilhaft ein Aufzeichnungsgerät wie eine photographische, vorzugsweise eine elektronische Kamera, insbesondere Laufbildkamera, angeschlossen werden kann.

Setzt man als Lichtquelle (14) eine Lichtquelle ein, die nicht im wesentlichen eine diskrete Emissionsbande aufweist, so empfiehlt es sich, zur Auswertung des gesamten Interferenzbildes aus dem erhaltenen Interferenzbild, in dem verschiedene Frequenzen überlagert sind, die Interferenzbilder einzelner Banden oder enger Frequenzbereiche herauszufiltern und einzeln der Auswertung zuzuführen.

Die optische Einrichtung (15) kann so ausgerichtet sein, daß die Kante 16 in das Beobachtungsfeld fällt. Das Beobachtungsfeld wird durch die Kante (16) in diesem Fall in einen Bildteil mit dem Aufzeichnungsträger (3) unter dem Glas (2) und in einen Bildteil mit dem freien unter einem Winkel von 60° geneigten Aufzeichnungsmaterial (3) aufgeteilt. Der erste Bildteil dient der bereits geschilderten Bestimmung der Oberflächenbeschaffenheit des Aufzeichnungsträgers (3). Der zweite Bildteil, der zur Bestimmung der Oberfläche der erfindungsgemäßen Aufzeichnungsträger nicht erforderlich ist, kann zur visuellen Beurteilung der Oberflächenstruktur verwendet werden.

Die Größe des Beobachtungsfeldes auf dem Aufzeichnungsträger (3) und das räumliche Auflösungsvermögen der Oberfläche (3') werden wesentlich durch die optische Einrichtung (15) bestimmt, wobei Art und Aufbau der optischen Einrichtung (15) leicht durch einige einfache Vorversuche ermittelt und schnell an die jeweiligen Anforderungen hinsichtlich der Größe des Beobachtungsfeldes auf dem Aufzeichnungsträger (3) und das räumliche Auflösungsvermögen der Oberfläche (3') angepaßt werden kann.

Die Vorrichtung kann noch durch einen Längenzähler zur Bestimmung der untersuchten Bahn- bzw. Bandlänge des Aufzeichnungsträgers ergänzt werden. Dieser sollte vorzugsweise mit der Welle der Aufwickelrolle (7) in Verbindung stehen.

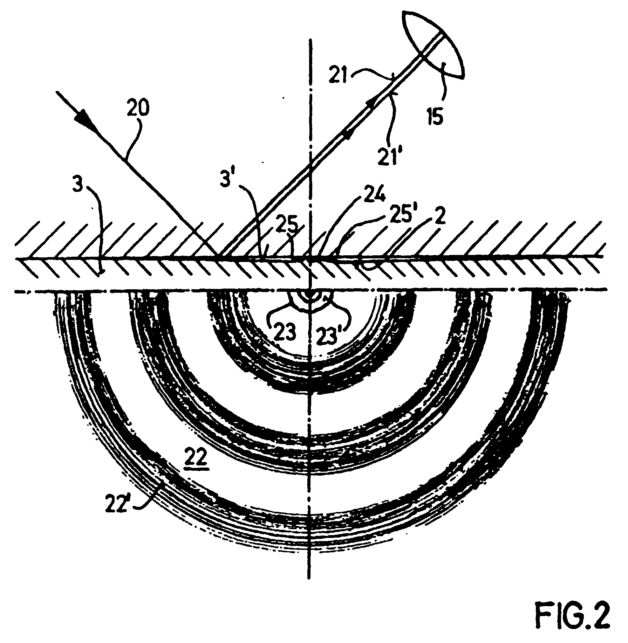

Zur Durchführung des Verfahrens legt man nach Entfernen des Trägers (11) zunächst das Aufzeichnungsmaterial (3) in die Bandführung derart ein, daß die bei der magnetischen Informationsspeicherung dem Magnetkopf zugewandte Seite an der Fläche (2) anliegt. Den danach wieder eingesetzten Träger (11) mit dem Glassegment (1) stellt man so ein, daß der Aufzeichnungsträger (3) an der Kante (16) tangential ausläuft. Wie bereits beschrieben, wird der Aufzeichnungsträger (3) durch eine aus dessen Oberfläche (3') hervorstehende Unebenheit von der Fläche (2) des Glassegments (1) zeltförmig abgehoben, so daß - wie Fig. 2 zeigt - das einfallende Licht zum Teil an der Fläche (2) und zum Teil an der zu untersuchenden Oberfläche (3') reflektiert wird. Durch die Laufzeitunterschiede zwischen den so entstehenden Teilstrahlen (21) und (21') und durch eine Phasendrehung am dichteren Medium um 180° entstehen bei der Überlagerung der Teilstrahlenbündel je nach Gangunterschied Auslöschungen und Verstärkungen. Aus diesen mittels einer optischen Einrichtung (15) sichtbar gemachten Überlagerungserscheinungen, die man bekanntermaßen als Interferenz bezeichnet, können nach an sich bekannten Verfahren, beispielsweise mit Hilfe eines Maßstabrasters manuell oder mittels einer elektronischen Kamera und Datenverarbeitungsanlage, automatisch die Verteilungsfunktion und die Dichtefunktion der Häufigkeit diskreter Abstände zwischen der Fläche (2) und der Oberfläche (3') des Aufzeichnungsträgers (3) ermittelt werden.

Die Verteilungsfunktion F(x) der Häufigkeit H des genannten Abstands a ist dabei gemäß Ullmans Encyklopädie der Technischen Chemie, 4. Aufl. Band 1, VCH Verlagsgesellschaft mbH, Weinheim, Seite 551-562, insbesondere Seite 556-557, definiert als

$$F(a) = H(x \leq a)$$

Diese definiert die Häufigkeit H für Werte von x, die kleiner oder gleich einem gegebenen Abstand a sind.

Die Dichtefunktion f(x) der Häufigkeit H des genannten Abstands a ist dabei gemäß Ullmanns Encyklopädie der Technischen Chemie, a.a.O. definiert als

$$F(a) = H(x \leq a) = \int_{-\infty}^{a} f(x)dx$$

mit

$$\int_{-\infty}^{+\infty} f(x)dx = 1.$$

Die aus den oben beschriebenen Interferenzmustern erhaltenen Werte können in an sich bekannter Weise anschaulich dargestellt werden. Als besonders zweckmäßig hat sich die Darstellung in tabellarischer oder in graphischer Form, insbesondere in einem x/y-Koordinatensystem, wobei der Abstand der Fläche (2) von der Oberfläche (3') des Aufzeichnungsmaterials (3) auf der x-Achse und die Häufigkeit diese Abstandes differentiell bzw. integral auf der y-Achse aufgetragen sind, erwiesen.

Die Dichtefunktion der Häufigkeit der Abstände kann eine multimodale, wie bi- oder trimodale, oder monomodale Funktion darstellen. Unter einer monomodalen Dichtefunktion wird eine stetig differenzierbare Dichtefunktion verstanden, die selber genau einen Maximalwert und deren 1. Ableitung genau zwei Extremwerte, nämlich einen Minimal- und einen Maximalwert, und genau einen Nullpunkt aufweist. Eine multimodale Dichtefunktion kann als eine Überlagerung mehrerer derartiger monomodaler Funktionen betrachtet werden. Erfindungsgemäß besonders bevorzugte Aufzeichnungsmaterialien besitzen eine monomodale Dichtefunktion.

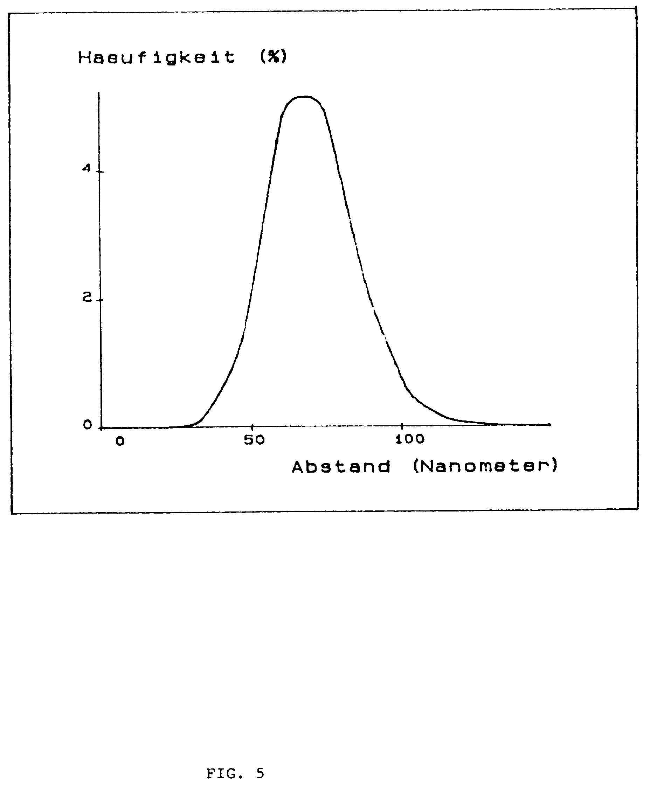

Die graphische Auswertung von erfindungsgemäß erhaltenen Meßergebnissen wird in beiliegenden Fig. 5 bis 9 gezeigt. Es zeigen

Fig. 5 bis 8    Dichtefunktionen der Abstandshäufigkeit für er findungsgemäße Aufzeichnungsmaterialien, hergestellt gemäß den Beispielen 1, 2, 3 bzw. 4;

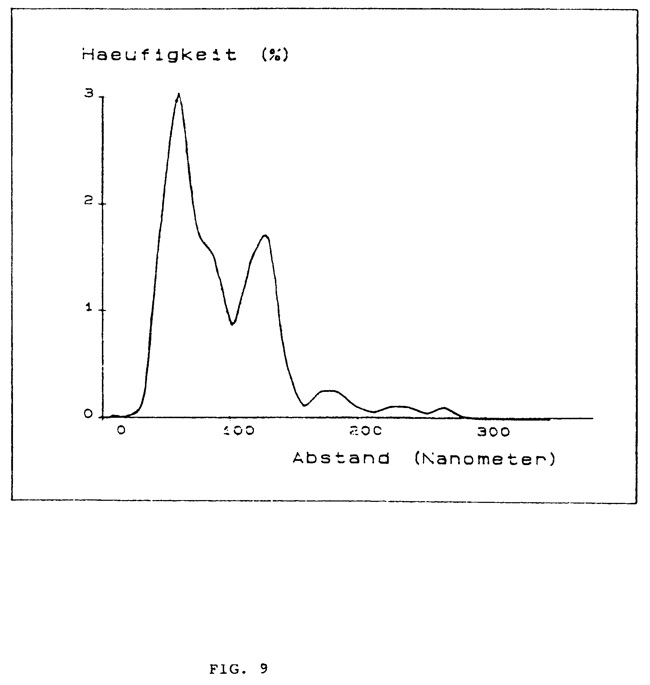

Fig. 9    die Dichtefunktion der Abstandshäufigkeit für ein DVC-Aufzeichnungsmaterial gemäß Stand der Technik.

Die Erfindung wird nun anhand der folgenden Beispiele näher erläutert.

## Beispiele

Die spezifische Oberfläche (SSA) wurde bestimmt nach DIN 66131.

Die Sättigungsmagnetisierung Mm/$\rho$ und die Koerzitivfeldstärke $H_c$ wurde bestimmt mit einem Schwingmagnetometer in einem Meßfeld von 400 kA/m bei einer mittleren Stopfdichte von $\rho$=0,7 g/cm$^3$.

Die Oberflächenbeschaffenheit wurde dabei nach dem Verfahren gemäß Beschreibung mit einer Probenlänge von 3 m und einer Probenbreite von 8 mm bestimmt. Der A50-Wert gibt dabei denjenigen Abstand zwischen dem Aufzeichnungsmaterial und der Referenzfläche (2) in nm an, den 50 % der Fläche des Aufzeichnungsträgers unterschreiten. Entsprechend bezeichnet der A90-Wert denjenigen Abstand, den 90 % der Fläche unterschreiten. Die Meßwerte sind Mittelwerte aus jeweils 5 repräsentativen Ausschnitten der Magnetschicht (mit einer Fläche von jeweils 10 mm$^2$). Die Zugspannung betrug jeweils 177 mN.

Zur Bestimmung des HF-Pegels wurden in einem Hi8-Recorder 7,7 MHz-Signale auf die Bandprobe aufgezeichnet. Der Pegel des Wiedergabesignals gleicher Frequenz wurde oszillographisch bestimmt. Als Referenzband diente das Hi8-Band Fuji S-DC. Das Band ist umso besser, je höher der HF-Pegel ist.

Zur Bestimmung des Modulationsrauschens MRh wurde das 7,7 MHz-Trägersignal demoduliert und die niederfrequente Modulation aus der RF-Hüllkurve der Bandprobe ermittelt. Als Referenzband diente das Hi8-Band Fuji S-DC. Das Band ist umso besser, je kleiner der MRh-Wert ist.

Der Reibungskoeffizient im RAF-Test wurde bei einer Probenlänge von 150 mm bei einer Meßstrecke von 100 mm bestimmt. Nach 15-minütiger Klimatisierung bei 40°C und 80 % relativer Feuchte wurde das Bandstück auf einer Länge von 100 mm mit einer Kraft von 2 N und einer Geschwindigkeit von 20 mm/s über einen Stahlstift (Durchmesser 2,5 mm, Umschlingung 90°) hin- und hergezogen. Gemessen wurde der Reibungskoeffizient nach 100 Cyclen im o.g. Klima. Das Band ist umso besser, je kleiner der Wert ist.

Der Reibungskoeffizient gegen Stahl wurde bei einer Probenlänge von 200 mm bestimmt. Bei 23 °C und 50 % relativer Feuchte wurden 50 mm der Bandprobe in 5 Cyclen mit einer Geschwindigkeit von 550 $\mu$m/s über eine Stahlhülse (Durchmesser 6 mm, Rauhigkeit Rz<200 nm, Umschlingung 90°) mit einer Kraft von 3 N hin- und hergezogen. Anschließend wurde eine neue Bandprobe auf einer Länge von 5 mm mit einer Geschwindigkeit von 13 $\mu$m/s über die konditionierte Stahlhülse hin- und hergezogen. Gemessen wurde der Reibungskoeffizient nach 5 Cyclen. Das Band ist umso besser, je kleiner der Wert ist.

## Beispiel 1

### a) Rückschicht

Eine Mischung aus 980 Gew. -Teilen feinteiligen Rußes (SSA 220 m$^2$/g, Partikeldurchmesser 16 nm, DBP-Zahl 105 ml/100 g), 20 Gew.-Teilen eines grobteiligen Rußes (SSA 13 m$^2$/g, Partikeldurchmesser 260 nm, DBP-Zahl 30 ml/100 g), 80 Gew.-Teilen BaSO$_4$ (gefällt), 400 Gew.-Teilen Nitrocellulose E730 (mittelviskos) (Firma Wolff Walsrode), 450 Gew.-Teilen eines Polyurethanharzes (Umsetzungsprodukt eines Polyesters auf Basis 1,4-Butandiol/1,6-Hexandiol/1,4-Cyclohexandimethanol und Adipinsäure/Isophthalsäure mit Diphenylmethan-4,4'-diisocyanat (MDI) sowie 1,4-Butandiol und 1,6-Hexandiol als Kettenverlängerer; $T_g$ = 55 °C, Mw = 100000), 50 Gew.-Teilen Zinkoleat, 50 Gew. -Teilen Ölsäure und einem Gemisch aus 380 Gew. -Teilen THF und 380 Gew.-Teilen Dioxan wurden 3 Stunden in einem Batch-Kneter geknetet, anschließend durch portionsweise Zugabe eines Gemisches aus 4320 Gew.-Teilen THF und 4320 Gew.-Teilen Dioxan verdünnt und dann 15 Stunden in einer Rührwerksmühle dispergiert.

Zu 1000 Gew.-Teilen der Dispersion wurden unter starkem Rühren 35 Gew.-Teile einer 50 Gew.-%igen Lösung des Umsetzungsprodukts von 3 Mol Toluylendiisocanat mit 1 Mol Trimethylolpropan in THF, sowie portionsweise ein Gemisch aus 370 Gew.-Teilen THF und 370 Gew.-Teilen Dioxan gegeben und anschließend durch ein Filter mit einer Porenweite von 2 μm filtriert.

Die Dispersion wurde in einem Rasterwalzenwerk auf die Rückseite einer 9 μm dicken Polyethylenterephthalat-Folie in einer Trockendicke von 0,6 μm aufgetragen.

b) Magnetschicht

Eine Mischung aus 1000 Gew.-Teilen eines ferromagnetischen Metallpigments (Fe:Co 93 Gew.-%:7 Gew.-%, $H_c$ 133 kA/m; SSA 52 m$^2$/g; durchschnittliche Partikellänge 135 nm, mittlerer durchschnittlicher Partikeldurchmesser 25 nm; Sättigungsmagnetisierung 151 nTm$^3$/g), 80 Gew. -Teilen alpha-Aluminiumoxid (durchschnittlicher Partikeldurchmesser 320 nm; AKP-30 der Firma Sumitomo Chemical), 65 Gew.-Teilen eines VC-Copolmers mit polaren Ankergruppen (Polymerisationsgrad 300; VC-Anteil 85 Gew.-%, Epoxid-Gehalt 3 Gew.-%, Gehalt an -SO$_3$Na 65 mmol/kg; MR-110 der Firma Nippon Zeon), 65 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4 Butandiol und 1,6-Hexandiol als Kettenverlängerer; $T_g$ = 37 °C, $M_w$ = 50 000, Gehalt an -SO$_3$Na = 45 mmol/kg), 15 Gew.-Teilen Stearinsäure, 10 Gew.-Teilen Myristinsäure, 140 Gew.-Teilen Tetrahydrofuran und 140 Gew.-Teilen Dioxan wurden in einem Batch-Kneter 2 Stunden geknetet. (Feststoffgehalt der Knetpaste 81,5 Gew.-%).

Die Knetmasse wurde anschließend portionweise in einem Dissolver unter starkem Rühren mit einem Gemisch aus 1450 Gew.-Teilen THF und 1450 Gew.-Teilen Dioxan versetzt und dann 9 Stunden mit einer Rührwerksmühle dispergiert. Zu der Dispersion wurden anschließend unter starkem Rühren 10 Gew.-Teile Butylstearat, 46 Gew.-Teile einer 50 Gew.-%igen Lösung des Umsetzungsproduktes von 3 Mol Toluylendiisocyanat mit 1 Mol Trimethylolpropan in THF, sowie portionsweise ein Gemisch aus 200 Gew.-Teilen THF und 200 Gew.-Teilen Dioxan gegeben. Nach Filtration durch ein Filter mit einer Porenweite von 2 μm wurde eine homogene, feinteilige, absetzstabile und flokkulatfreie beschichtungsfertige Dispersion erhalten. (Feststoffgehalt der Dispersion 26,0 %).

Die Dispersion wurde auf die Vorderseite der rückbeschichteten Polyethylenterephthalat-Folie (Rauhigkeit Ra=7 nm; gemessen mit WYKO-Gerät) in einer Trockenschichtdicke von 2,5 μm aufgetragen. Vor dem Trocknen wurde die beschichtete Bahn zur Ausrichtung der ferromagnetischen Pigmente durch eine Richtstrecke, bestehend aus einem Permanentmagneten mit einer Feldstärke von 400 kA/m und einer Spule mit einer Feldstärke von 200 kA/m, hindurchgeführt. Nach dem Trocknen bei 80 °C wurde die Folienbahn in einem Stahl/StahlKalander mit 6 Spalten bei 85 °C und einem Druck von 200 kg/cm satiniert und anschließend in 8 mm breite Videobänder geschnitten.

Die Rauhigkeitsanalyse der Oberfläche ergab die in Tabelle 1 zusammengefaßten Meßwerte.

Tabelle 1

| Rauhigkeitsanalyse | | |
|---|---|---|
| Abstand (nm) | Häufigkeit (%) | Summe Häufigkeiten (%) |
| 48 | 3,5 | 3,5 |
| 52 | 2,7 | 5,2 |
| 54 | 2,3 | 8,5 |
| 56 | 2,6 | 11,1 |
| 58 | 5,9 | 17,0 |
| 62 | 9,2 | 26,3 |
| 64 | 4,0 | 30,3 |
| 66 | 8,3 | 38,5 |
| 68 | 5,8 | 44,4 |
| 70 | 4,1 | 48,5 |
| 72 | 7,8 | 56,2 |
| 74 | 5,5 | 61,8 |

Tabelle 1 (fortgesetzt)

| Rauhigkeitsanalyse | | |
|---|---|---|
| Abstand (nm) | Häufigkeit (%) | Summe Häufigkeiten (%) |
| 76 | 3,5 | 85,2 |
| 78 | 6,0 | 71,3 |
| 80 | 4,2 | 75,5 |
| 82 | 5,0 | 80,5 |
| 84 | 2,2 | 82,7 |
| 86 | 2,8 | 85,6 |
| 88 | 3,4 | 89,0 |
| 90 | 2,7 | 91,7 |
| 94 | 2,5 | 94,2 |
| 98 | 2,2 | 96,4 |
| 105 | 2,2 | 98,5 |

Anteil unter 100 Nanometer: 87,2 Prozent

A10       56 nm
A50       72 nm
A90       90 nm
A90 - A10   34 nm

Figur 5 zeigt die dazugehörige monomodale Dichtefunktion Die ermittelten Bandeigenschaften sind in Tabelle 6 zusammengefaßt.

Beispiel 2

a) Rückschicht

Wie in Beispiel 1 beschrieben.
Die Dispersion wurde in einem Rasterwalzenwerk auf die Rückseite einer 6,3 $\mu$m dicken Polyethylenterephthalat-Folie in einer Trockendicke von 0,6 $\mu$m aufgetragen.

b) Unterschicht

Eine Mischung aus 1000 Gew.-Teilen Titandioxid (Rutil, Partikelgröße 30 nm, SSA 55 m$^2$/g; P-370 der Firma Kemira), 75 Gew.-Teilen eines VC-Copolymeren mit polaren Ankergruppen (Polymerisationsgrad 300; VC-Anteil, 85 Gew.-%, Epoxid-Gehalt 3 Gew.-%, Gehalt an -SO$_3$Na 65 mmol/kg; MR-110 der Firma Nippon Zeon), 75 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MOL sowie 1,4-Butandiol und 1,6-Hexandiol als Kettenverlängerer; T$_g$ = 70°C, M$_w$ = 30000, Gehalt an -SO$_3$Na 100 mmol/kg), 20 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MOL sowie 1,4-Butandiol und 1,6-Hexandiol als Kettenverlängerer; T$_g$ = 25°C, M$_w$ = 45000, Gehalt an -SO$_3$Na 20 mmol/kg), 25 Gew.-Teilen Stearinsäure, 170 Gew.-Teilen THF und 170 Gew.-Teilen Dioxan wurden in einem Batch-Kneter 3 Stunden geknetet (Feststoffgehalt der Knetpaste 77,9 Gew.-%).
Die Knetmasse wurde anschließend portionsweise mit einem Gemisch aus 1200 Gew.-Teilen THF und 1200 Gew.-Teilen Dioxan in einem Dissolver unter starkem Rühren versetzt und dann 12 Stunden mit einer Rührwerksmühle dispergiert. Zu der Mischung wurden anschließend unter starkem Rühren 60 Gew.-Teile einer 50 Gew.-%igen Lösung des Umsetzungsproduktes von 3 Mol Toluylendiisocyanat mit 1 Mol Trimethylolpropan in THF gegeben. Nach Filtration durch ein Filter mit einer Porenweite von 2 $\mu$m wurde eine homogene, feinteilige, absetzstabile und flokkulatfreie beschichtungsfertige Dispersion für die Unterschicht erhalten (Feststoffgehalt der Dispersion 30,7 Gew.-%).

c) Oberschicht

Eine Mischung aus 1000 Gew.-Teilen eines ferromagnetischen Metallpigments (Fe:Co = 84 Gew.-%:16 Gew.-%, $H_c$ = 180 kA/m; SSA = 58 $m^2$/g durchschnittliche Partikellänge 80 nm, mittlerer durchschnittlicher Partikeldurchmesser 25 nm; Sättigungsmagnetisierung 176 $nTm^3$/g), 70 Gew.-Teilen alpha-Aluminiumoxid (durchschnittlicher Partikeldurchmesser 220 nm, HIT 60A der Firma Sumitomo Chemical), 85 Gew.-Teilen eines VC-Copolymeren mit polaren Ankergruppen (Polymerisationsgrad 300; VC-Anteil 85 Gew.-%, Epoxid-Gehalt 3 Gew.-%, Gehalt an -$SO_3$Na 65 mmol/kg, vgl. Beispiel 1), 50 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; $T_g$ = 70 °C, $M_w$ = 30000, Gehalt an -$SO_3$Na 100 mmol/kg), 10 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; $T_g$ = 25°C, $M_w$ = 45000, Gehalt an -$SO_3$Na 20 mmol/kg), 20 Gew.-Teilen Stearinsäure, 10 Gew.-Teilen Myristinsäure, 150 Gew.-Teilen Tetrahydrofuran und 150 Gew.-Teilen Dioxan wurden in einem Batch-Kneter 2 Stunden geknetet (Feststoffgehalt der Knetpaste 80,6 Gew.-%).

Die Knetmasse wurde anschließend portionsweise in einem Dissolver unter starkem Rühren mit einem Gemisch aus 1550 Gew.-Teilen THF und 1550 Gew.-Teilen Dioxan versetzt und dann 10 Stunden mit einer Rührwerksmühle dispergiert. Zu der Dispersion wurden anschließend unter starkem Rühren 10 Gew.-Teile Butylstearat, 40 Gew.-Teile einer 50 Gew.-%igen Lösung des Umsetzungsproduktes von 3 Mol Toluylendiisocyanat mit 1 Mol Trimethylolpropan in THF, sowie portionsweise ein Gemisch aus 440 Gew.-Teilen THF und 440 Gew.-Teilen Dioxan gegeben. Nach Filtration durch ein Filter mit einer Porenweite von 2 μm wurde eine homogene, feinteilige, absetzstabile und flokkulatfreie beschichtungsfertige Dispersion für die Oberschicht erhalten (Feststoffgehalt der Dispersion 22,9 Gew.-%).

d) Auftragen von Unterschicht und Oberschicht

Die Dispersionen wurden auf die Vorderseite der rückbeschichteten Polyethylenterephthalat-Folie (Rauhigkeit Ra = 3,5 nm) naß-in-naß aufgetragen. Vor dem Trocknen wurde die beschichtete Folie zur Ausrichtung der ferromagnetischen Pigmente durch eine Richtstrecke, bestehend aus einem Permanentmagneten mit einer Feldstärke von 400 kA/m und einer Spule mit einer Feldstärke von 200 kA/m, hindurchgeführt. Nach dem Trocknen bei 80 °C wurde die Folienbahn in einem Stahl/Stahl-Kalander mit 6 Spalten bei 85 °C und einem Druck von 200 kg/cm satiniert und anschließend in 8 mm breite Videobänder geschnitten.

Die Rauhigkeitsanalyse ergab die in Tabelle 2 zusammengefaßten Meßwerte.

Tabelle 2

| Rauhigkeitsanalyse | | |
|---|---|---|
| Abstand (nm) | Häufigkeit (%) | Summe Häufigkeiten (%) |
| 47 | 2,5 | 7,5 |
| 48 | 4,4 | 6,9 |
| 50 | 3,4 | 10,3 |
| 54 | 6,4 | 15,7 |
| 56 | 4,9 | 21,7 |
| 58 | 10,4 | 32,8 |
| 60 | 2,8 | 34,8 |
| 62 | 11,1 | 45,8 |
| 64 | 5,2 | 51,1 |
| 66 | 9,6 | 60,7 |
| 68 | 5,9 | 66,7 |
| 70 | 3,7 | 70,4 |
| 72 | 6,3 | 75,7 |
| 74 | 3,8 | 80,6 |

Tabelle 2 (fortgesetzt)

| Rauhigkeitsanalyse | | |
|---|---|---|
| Abstand (nm) | Häufigkeit (%) | Summe Häufigkeiten (%) |
| 76 | 2,2 | 82,7 |
| 78 | 3,5 | 86,2 |
| 80 | 2,2 | 88,4 |
| 82 | 2,4 | 90,9 |
| 86 | 2,2 | 93,0 |
| 90 | 2,7 | 95,7 |
| 98 | 2,2 | 97,9 |
| 129 | 2,8 | 99,9 |

Anteil unter 100 Nanometer 99,3 Prozent

A10           50 nm
A50           64 nm
A90           82 nm
A90 - A10     32 nm

Die Bandeigenschaften sind in Tabelle 6 zusammengefaßt.

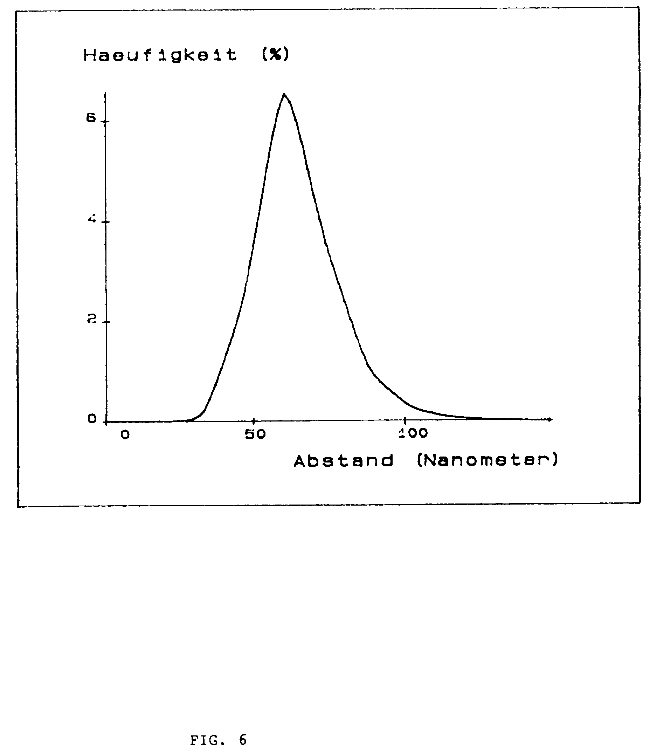

Figur 6 zeigt die ermittelte monomodale Funktion.

Beispiel 3

a) Unterschicht

Eine Mischung aus 1000 Gew.-Teilen alpha-Eisenoxid (durchschnittliche Partikellänge 118 nm, mittlerer durchschnittlicher Partikeldurchmesser 28 nm, SSA = 60,1 $m^2$/g, DPN 455 BX der Firma Toda), 75 Gew.-Teilen eines VC-Copolymeren mit polaren Ankergruppen (Polymerisationsgrad 300; VC-Anteil 85 Gew.-%, Epoxid-Gehalt 3 Gew.-%, Gehalt an -$SO_3$Na 65 mmol/kg), 75 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; $T_g$ = 70 °C, $M_w$ = 30000, Gehalt an -$SO_3$Na 100 mmol/kg), 20 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; $T_g$ = 25 °C, $M_w$ = 45000, Gehalt an -$SO_3$Na 20 mmol/kg), 25 Gew.-Teilen Stearinsäure, 180 Gew.-Teilen THF und 180 Gew.-Teilen Dioxan wurden in einem Batch-Kneter 3 Stunden geknetet (Feststoffgehalt der Knetpaste 76,8 Gew.-%).
Die Knetmasse wurde anschließend in einem Dissolver unter starkem Rühren portionsweise mit einem Gemisch aus 1670 Gew.-Teilen THF und 1670 Gew.-Teilen Dioxan versetzt und dann 15 Stunden mit einer Rührwerksmühle dispergiert. Zu der Dispersion wurden anschließend unter starkem Rühren 60 Gew.-Teile einer 50 Gew.-%igen Lösung des Umsetzungsproduktes von 3 Mol Tolylendiisocyanat mit 1 Mol Trimethylolpropan in THF gegeben. Nach Filtration durch ein Filter mit einer Porenweite von 2 μm wurde eine homogene, feinteilige, absetzstabile und flokkulatfreie beschichtungsfertige Dispersion für die Unterschicht erhalten (Feststoffgehalt der Dispersion 24,7 Gew.-%).

b) Oberschicht

Die Dispersion für die Oberschicht wurde gemäß Beispiel 2(c) hergestellt.

c) Auftragen der Unterschicht und Oberschicht

Das Auftragen der Unterschicht und Oberschicht erfolgte gemäß Beispiel 2(d).
Die Rauhigkeitsanalyse ergab die in Tab. 3 zusammengefaßten Meßwerte.

Tabelle 3

| Rauhigkeitsanalyse | | |
|---|---|---|
| Abstand (nm) | Häufigkeit (%) | Summe Häufigkeiten (%) |
| 52 | 2,3 | 2,3 |
| 56 | 3,2 | 5,5 |
| 58 | 5,1 | 10,5 |
| 62 | 9,2 | 19,8 |
| 64 | 4,2 | 23,9 |
| 66 | 8,7 | 32,6 |
| 68 | 6,0 | 38,6 |
| 70 | 4,1 | 42,7 |
| 72 | 7,7 | 50,5 |
| 74 | 6,2 | 55,6 |
| 76 | 3,1 | 58,7 |
| 78 | 5,5 | 64,3 |
| 80 | 3,8 | 68,1 |
| 82 | 4,6 | 72,7 |
| 84 | 2,1 | 74,8 |
| 86 | 2,6 | 77,4 |
| 88 | 3,3 | 80,7 |
| 90 | 2,9 | 83,6 |
| 94 | 2,9 | 86,5 |
| 98 | 2,9 | 89,4 |
| 101 | 2,6 | 91,9 |
| 107 | 2,7 | 94,0 |
| 117 | 2,7 | 96,6 |
| 117 | 2,7 | 96,6 |
| 131 | 2,1 | 98,8 |

Anteil unter 100 Nanometer 90,6 Prozent

A10        58 nm
A50        72 nm
A90        99 nm
A90 - A10    41 nm

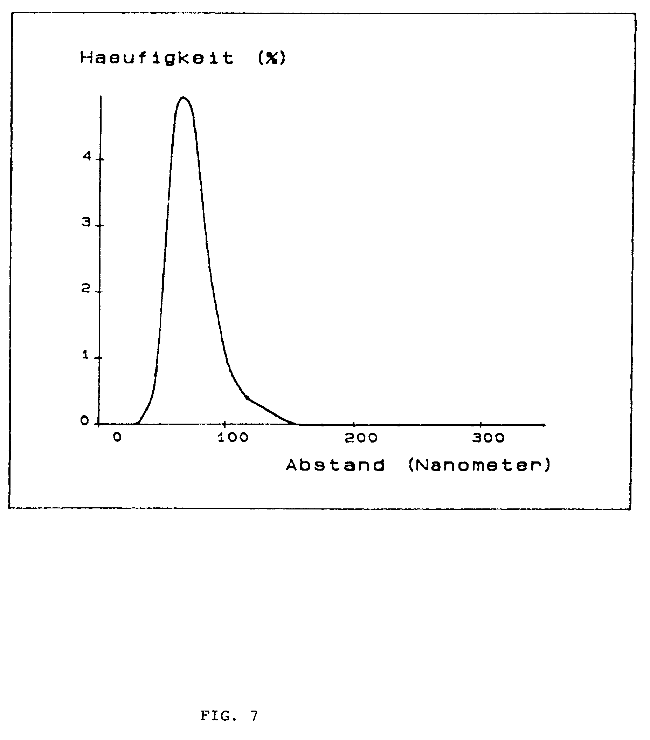

Figur 7 zeigt die dazugehörige monomodale Dichtefunktion.
Die Bandeigenschaften sind in Tabelle 6 zusammengefaßt.

Beispiel 4

a) Unterschicht

Eine Mischung aus 1000 Gew.-Teilen Chromgrün (durchschnittliche Partikellänge 130 nm, mittlerer durchschnittlicher Partikeldurchmesser 19 nm, SSA = 64 m$^2$/g), 75 Gew.-Teilen eines VC-Copolymeren mit polaren Ankergruppen (Polymerisationsgrad 300; VC-Anteil 85 Gew.-%, Epoxid-Gehalt 3 Gew.-%, Gehalt an -SO$_3$Na 65 mmol/kg), 75 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; T$_g$ = 70 °C, M$_w$ = 30000, Gehalt an -SO$_3$Na 100 mmol/kg), 20 Gew.-Teilen eines Polyurethanharzes mit polaren Ankergruppen (Umsetzungsprodukt eines Polyesters auf Basis 1,4-Butandiol/1,6-Hexandiol/1,4-Cyclohexandimethanol und Adipinsäure/Isophthalsäure mit MDI sowie 1,4-Butandiol und 1,6-Hexandiol als Kettenverlängerer; T$_g$ = 25 °C, M$_w$ = 45000, Gehalt an -SO$_3$Na 20 mmol/kg), 25 Gew.-Teilen Stearinsäure, 175 Gew.-Teilen Tetrahydrofuran (THF) und 175 Gew.-Teilen 1,4-Dioxan (Dioxan) wurden in einem Batch-Kneter 3 Stunden geknetet (Feststoffgehalt der Knetpaste 77,3 Gew.-%).

Die Knetmasse wurde anschließend in einem Dissolver unter starkem Rühren portionsweise mit einem Gemisch aus 1650 Gew.-Teilen THF und 1650 Gew.-Teilen Dioxan versetzt und dann 14 Stunden mit einer Rührwerksmühle dispergiert. Zu der Mischung wurden anschließend unter starkem Rühren 60 Gew.-Teile einer 50 Gew.-%igen Lösung des Umsetzungsproduktes von 3 Mol Toluylendiisocanat mit 1 Mol Trimethylolpropan in THF gegeben. Nach Filtration durch ein Filter mit einer Porenweite von 2 μm wurde eine homogene, feinteilige absetzstabile und flokkulatfreie beschichtungsfertige Dispersion für die Unterschicht erhalten (Feststoffgehalt der Dispersion 26,0 Gew.-%).

b) Oberschicht

Die Dispersion für die Oberschicht wurde gemäß Beispiel 2(c) hergestellt.

c) Auftragen der Unterschicht und Oberschicht

Das Auftragen der Unterschicht und Oberschicht erfolgte gemäß Beispiel 2(d).
Die Rauhigkeitsanalyse ergab die in Tabelle 4 zusammengefaßten Meßwerte.

Tabelle 4

| Rauhigkeitsanalyse | | |
|---|---|---|
| Abstand (nm) | Häufigkeit (%) | Summe Häufigkeiten (%) |
| 41 | 2,7 | 2,7 |
| 45 | 6,2 | 9,0 |
| 47 | 7,4 | 16,4 |
| 49 | 17,2 | 33,6 |
| 50 | 8,7 | 42,3 |
| 52 | 4,1 | 46,4 |
| 54 | 7,6 | 54,0 |
| 56 | 6,4 | 50,4 |
| 58 | 9,5 | 69,9 |
| 60 | 2,1 | 71,9 |
| 62 | 6,3 | 78,2 |
| 64 | 2,3 | 80,5 |
| 66 | 3,6 | 84,1 |
| 70 | 3,0 | 87,1 |
| 74 | 2,9 | 90,0 |
| 80 | 2,3 | 92,3 |
| 88 | 2,6 | 94,9 |
| 96 | 2,0 | 96,9 |

Tabelle 4 (fortgesetzt)

| Rauhigkeitsanalyse | | |
|---|---|---|
| Abstand (nm) | Häufigkeit (%) | Summe Häufigkeiten (%) |
| 119 | 2,1 | 99,1 |

Anteil unter 100 Nanometer 87,4 Prozent

A10      47 nm
A50      54 nm
A90      76 nm
A90 - A10   29 nm

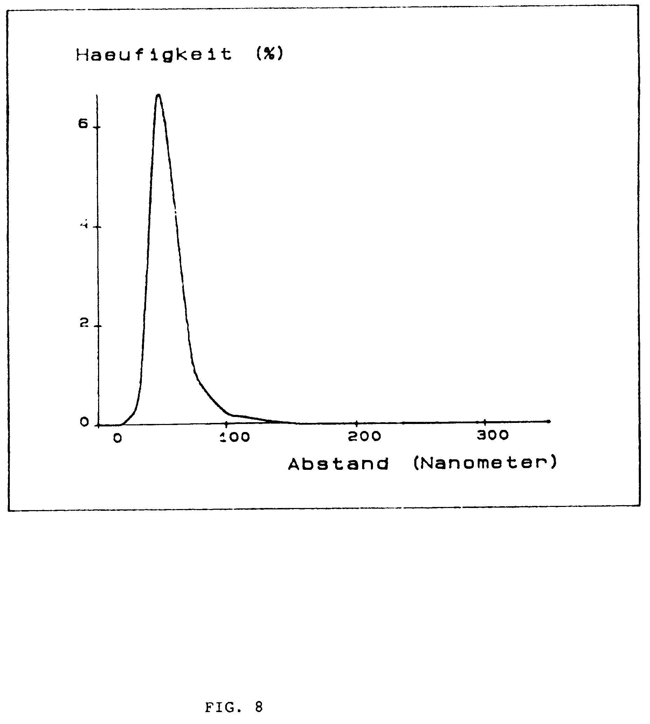

Figur 8 zeigt die ermittelte monomodale Dichteverteilung
Die Bandeigenschaften sind in Tabelle 6 zusammengefaßt.

Vergleichsbeispiel

Für ein herkömmliches Doppelschichtband wurden die gleichen Parameter, wie für die erfindungsgemäßen Bänder gemäß den Beispielen 1 bis 4 ermittelt.
Schichtaufbau des herkömmlichen Doppelschichtbands:

- Basis-Folie: PET oder PEN, d ~ 6,5 $\mu$m
- Rückschicht, d ~ 0,5 - 0,6 $\mu$m

  Pigmentbasis:   Ruß, $BaSO_4$

- Nichtmagnetische Unterschicht:
  d ~ 1,0 - 1,1 $\mu$m

  Pigmentbasis :   $\alpha$-$Fe_2O_3$, nadelförmig (1 ~120 nm; d ~30 nm) Ruß/ $\alpha$-$Al_2O_3$ , Durchmesser ~ 0,2 - 0,3 $\mu$m)
  Bindemittelbasis:   VC-Copolymeres mit polaren Gruppen (-$SO_3$X; X = Alkali, $NH_4^+$) / PU-Bindemittel mit polaren
  Gruppen (-$SO_3$X) / Vernetzungsmittel auf Polyisocyanatbasis
  Gleitmittel:   Fettsäure/Fettsäureester

- Magnetische Oberschicht: d ~ 0,3 $\mu$m

  Pigmentbasis:   ferromagnetisches Metallpigment (Hc ~ 180 KA/m;
  l ~ 100 nm; d ~ 20 - 25 nm)
  Zusammensetzung: Fe-Co-Al-Y/$\alpha$-$Al_2O_3$ (s.o.), Ruß

Bindemittel und Gleitmittel s.o.

Die Rauhigkeitsanalyse ergab die in Tabelle 5 zusammengefaßten Werte.

Tabelle 5

| Rauhigkeitsanalyse | | |
|---|---|---|
| Abstand (nm) | Häufigkeit (%) | Summe Häufigkeiten (%) |
| 45 | 2,3 | 2,3 |
| 49 | 5,3 | 7,6 |
| 50 | 2,6 | 10,1 |
| 54 | 4,3 | 14,4 |
| 56 | 2,9 | 17,3 |

Tabelle 5 (fortgesetzt)

| Rauhigkeitsanalyse | | |
|---|---|---|
| Abstand (nm) | Häufigkeit (%) | Summe Häufigkeiten (%) |
| 58 | 5,4 | 22,7 |
| 62 | 6,2 | 28,9 |
| 64 | 2,1 | 31,0 |
| 66 | 3,7 | 34,8 |
| 68 | 2,3 | 37,0 |
| 72 | 4,1 | 41,2 |
| 76 | 2,8 | 44,0 |
| 80 | 3,3 | 47,3 |
| 84 | 2,6 | 49,9 |
| 88 | 2,7 | 52,5 |
| 92 | 2,3 | 54,8 |
| 96 | 5,0 | 59,9 |
| 101 | 2,5 | 62,4 |
| 107 | 2,1 | 64,5 |
| 113 | 2,3 | 66,8 |
| 117 | 2,2 | 69,0 |
| 121 | 6,2 | 75,2 |
| 125 | 5,6 | 80,8 |
| 129 | 3,1 | 84,0 |
| 133 | 2,9 | 86,9 |
| 139 | 2,9 | 89,8 |
| 158 | 2,1 | 91,9 |
| 178 | 2,0 | 93,9 |
| 194 | 2,0 | 95,9 |
| 239 | 2,1 | 98,0 |

Anteil unter 100 Nanometer: 61,2 Prozent

A10      50 nm
A50      86 nm
A90      143 nm
A90 - A10    93 nm

Die Bandeigenschaften sind in Tabelle 6 zusammengefaßt. Figur 9 zeigt die ermittelte polymodale Dichtefunktion.

Tabelle 6

| | Bsp. 1 | Bsp. 2 | Bsp. 3 | Bsp. 4 | Vgl.-Beisp. 1 |
|---|---|---|---|---|---|
| Schichtdicke[1] | | | | | |
| Obers. [$\mu$m] | 2,3 | 0,32 | 0,21 | 0,23 | 0,30 |
| Unters. [$\mu$m] | -- | 1,3 | 1,1 | 1,3 | 1,00 |
| A50 | 72 | 64 | 72 | 54 | 86 |
| A90 | 90 | 82 | 99 | 76 | 143 |
| Verteilung | monomodal | monomodal | monomodal | monomodal | polymodal |
| HF-Pegel[2] [dB] | + 0,5 | + 4,0 | + 3,7 | + 5,2 | + 1,5 |
| MRh[2] [dB] | + 1,5 | + 2,0 | + 3,0 | +1,0 | +5,5 |
| Reibungskoeffizient | | | | | |
| RAF-Test | 0,29 | 0,15 | 0,2 | 0,13 | 0,13 |
| gegen Stahl | 0,35 | 0,4 | 0,35 | 0,3 | |

1) nach Satinage
2) Referenzband: Fuji S-DC

Ein Vergleich der Meßergebnisse zeigt, daß die erfindungsgemäßen Magnetbänder, bedingt durch das deutlich verbesserte Oberflächenprofil, überraschend verbesserte Pegelwerte und ein überraschend geringes Modulationsrauschen zeigen. Außerdem ergeben die Bänder für beide beschriebenen Reibungsprüfmethoden akzeptabel niedrige Reibungskoeffizienten als Voraussetzung für gute Laufeigenschaften etwa in Hi8-Recordern oder DVC-Laufwerken.

Ein Vergleich der Dichtefunktionen der Abstandshäufigkeiten gemäß den Figuren 5 bis 8 (erfindungsgemäße Bänder) mit der gemäß Figur 9 (Stand der Technik) belegt, daß die erfindungsgemäßen Bänder ein extrem homogenes Oberflächenprofil besitzen.

**Patentansprüche**

1. Magnetisches Aufzeichnungsmaterial, umfassend einen unmagnetischen Träger und darauf aufgebracht eine oder mehrere weitere Schichten, wobei wenigstens eine dieser weiteren Schichten eine zur Informationsspeicherung geeignete Magnetschicht ist, dadurch gekennzeichnet, daß die einem zur Informationsaufzeichnung verwendeten Magnetkopf zugewandte Oberfläche (3') des Aufzeichnungsmaterials (3) ein Oberflächenprofil aufweist, das so beschaffen ist, daß 50 % der Oberfläche (3') einen Abstand von höchstens 80 nm und 90 % der Oberfläche (3') einen Abstand von höchstens 140 nm von einer Referenzfläche (2) aufweisen, an welcher das Aufzeichnungsmaterial (3) mit seiner Oberfläche (3') unter einer Zugspannung von etwa 140 bis 200 mN aufliegt.

2. Aufzeichnungsmaterial nach Anspruch 1, dadurch gekennzeichnet, daß 50 % der Oberfläche (3') einen Abstand von höchstens 40 bis 80 nm und 90 % der Oberfläche (3') einen Abstand von höchstens 50 bis 130 nm von der Referenzfläche (2) aufweisen.

3. Aufzeichnungsmaterial nach einem der vorhergehenden Ansprüche, dadurch gekennzeichnet, daß die Dichtefunktion der Häufigkeit diskreter Abstandswerte eine monomodale Verteilung zeigt.

4. Aufzeichnungsmaterial nach einem der vorherigen Ansprüche, dadurch gekennzeichnet, daß das Abstandsverhältnis A90 zu A50 etwa 1,0 bis etwa 1,5 beträgt, wobei die Abstandswerte A90 und A50 denjenigen Abstandswerten entsprechen, die 90% bzw. 50% der Oberfläche (3') unterschreiten und aus der Verteilungsfunktion diskreter Abstandswerte ermittelbar sind.

5. Aufzeichnungsmaterial nach einem der vorherigen Ansprüche, dadurch gekennzeichnet, daß die zur Abstandsmessung verwendete Zugspannung etwa 170 bis 180 mN, insbesondere 177 mN, beträgt.

6. Aufzeichnungsmaterial nach einem der vorhergehenden Ansprüche, dadurch gekennzeichnet, daß man das Oberflächenprofil der Oberfläche (3') bestimmt, indem man Interferenzlinien (22, 22') dadurch erzeugt, daß man einen Lichtstrahl (20) schräg auf die Oberfläche (3') des an der Referenzfläche (2) anliegenden Aufzeichnungsmaterials (3) richtet, wobei der Lichtstrahl (20) zu einem Teil an der Oberfläche (3') und zu einem anderen Teil an der Referenzfläche (2) reflektiert wird, und durch Überlagerung dieser beiden Teilstrahlen (21, 21') ein Interferenzbild entsteht, das dem von der Referenzfläche (2) sich abhebenden Oberflächenprofil des Aufzeichnungsmaterials (3) äquivalent ist.

7.  Aufzeichnungsmaterial nach einem der vorhergehenden Ansprüche, umfassend in einer Magnetschicht ein zur magnetischen Informationsspeicherung geeignetes ferromagnetisches Pigment.

8.  Aufzeichnungsmaterial nach Anspruch 7, umfassend als ferromagnetisches Pigment ein metallisches Pigment.

9.  Aufzeichnungsmaterial nach einem der vorhergehenden Ansprüche, dadurch gekennzeichnet, daß auf dem unmagnetischen Träger auf der dem Magnetkopf abgewandten Seite eine Rückschicht und/oder zwischen Träger und Magnetschicht eine Unterschicht angeordnet ist.

10. Verwendung eines Aufzeichnungsmaterials nach einem der Ansprüche 1 bis 9 zur digitalen Informationsaufzeichnung, insbesondere zur digitalen Videoaufzeichnung.

11. Verfahren zur Herstellung eines Aufzeichnungsmaterials nach einem der Ansprüche 1 bis 9, das folgende Schritte umfaßt:

   a) Herstellung der Beschichtungsmassen für die magnetische(n) Aufzeichungsschicht(en) und gegebenenfalls für weitere unmagnetische oder geringmagnetische Unter- oder Rückschichten des Aufzeichnungsmaterials, wobei man

   i) für die mit einem Magnetkopf während der Informationsaufzeichnung in Kontakt kommende magnetische Aufzeichnungsschicht und gegebenenfalls für die unmagnetischen(n) oder schwachmagnetische(n) Unterschicht(en) und/oder Rückschicht(en) ein knetbares Gemisch herstellt, dessen Feststoffgehalt im Bereich von etwa 78 bis 85 Gew.-% liegt,
   ii) das Gemisch über einen Zeitraum von 1 bis 5 Stunden knetet, und
   iii) das geknetete Gemisch in einem Verdünnungsmittel dispergiert, wobei die so erhaltene Dispersion einen Feststoffgehalt von etwa 15 bis 35 Gew.-% besitzt;

   b) Auftragen der Beschichtungsmasse(n) auf den unmagnetischen Träger; und

   c) Aushärten der Schichten, gegebenenfalls nach Orientieren der darin dispergierten Pigmentpartikel.

12. Verfahren nach Anspruch 11, dadurch gekennzeichnet, daß das knetbare Gemisch eine lineare, gesättigte oder ungesättigte $C_{12}$-$C_{20}$ Fettsäure enthält.

13. Verfahren nach Anspruch 12, dadurch gekennzeichnet, daß man die langkettige Fettsäure in einem Anteil von etwa 2 bis 5 Gew.-%, bezogen auf das magnetische Pigment, in Knetpasten für die Aufzeichnungsschicht(en), bzw. bezogen auf die unmagnetischen oder geringmagnetischen Pigmente in Knetpasten für die Unter- oder Rückschicht(en), einsetzt.

14. Verfahren nach einem der Ansprüche 11 bis 13, dadurch gekennzeichnet, daß man das knetbare Gemisch in einem Kneter mit einer spezifischen Leistungsaufnahme in der Knetpaste von etwa 0,05 bis 3 Watt/cm$^3$ durch etwa 1- bis 5-stündiges Kneten bei einer Temperatur von etwa 25 bis 50°C und Normaldruck (etwa 1 atm) herstellt.

15. Verfahren zur Herstellung von Beschichtungsmassen für magnetische Aufzeichnungsmaterialien, dadurch gekennzeichnet, daß man eine Beschichtungsmasse wie in einem der Ansprüche 11 bis 14 angegeben herstellt.

FIG.1

FIG.2

FIG.3

EP 0 881 628 A2

FIG.4

FIG. 5

FIG. 6

Haeufigkeit (%)

Abstand (Nanometer)

FIG. 7

FIG. 8

FIG. 9